(19) **Europäisches Patentamt / European Patent Office / Office européen des brevets**

(11) **EP 4 560 542 A1**

(12) **EUROPEAN PATENT APPLICATION**

(43) Date of publication:
**28.05.2025 Bulletin 2025/22**

(21) Application number: **23307014.3**

(22) Date of filing: **21.11.2023**

(51) International Patent Classification (IPC):
**G06N 10/40** (2022.01)     **G06N 10/60** (2022.01)

(52) Cooperative Patent Classification (CPC):
**G06N 10/60; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **D'ARCANGELO, Mauro**
**91300 MASSY (FR)**
• **ROSSI, Johan-Luca**
**91300 MASSY (FR)**

(74) Representative: **Lavoix**
**2, place d'Estienne d'Orves**
**75441 Paris Cedex 09 (FR)**

(54) **A METHOD FOR SAMPLING QUANTUM STATES DISTRIBUTED ACCORDING TO A DISTRIBUTION IN A HILBERT SPACE**

(57)     The present invention relates to a method for sampling quantum states distributed according to a distribution in a Hilbert space, the method being implemented by a computing system (10) comprising a quantum processor (12) having an array of qubits, the method comprising the sampling of the quantum states of the Hilbert space using a Markov chain algorithm, the first sample being the initial quantum state of the array of qubits, each other sample being obtained one by one, by preparing the array of qubits so that its quantum state corresponds to the previous sample and by performing a quantum evolution of the quantum state of the prepared array of qubits, each quantum evolution being performed by applying a Many-Body Localization unitary evolution operator to the array of qubits.

FIG.1

EP 4 560 542 A1

**Description**

TECHNICAL FIELD OF THE INVENTION

The present invention concerns a method for sampling quantum states distributed according to a distribution in a Hilbert space. The present invention also concerns an associated computing system.

BACKGROUND OF THE INVENTION

Markov chains are ubiquitous in numerical simulations of physical systems. They are used whenever it is necessary to extract samples from a probability distribution.

Obtaining samples of quantum states of a Hilbert space according to the distribution of the quantum states would be of particular interest. Such samples could be used for example for the following applications:

- simulate spin systems beyond the actual constraints of the hardware (meaning arbitrary interactions, connectivity, dimensionality, ...),
- solving combinatorial optimization problems that are not native to the hardware (for example for solving any graph problem and not be restricted to unit-disk graphs),
- preparation for arbitrary states, and
- generative modelling.

However, the current algorithms are either based on classical objects, or do not target the sampling of a Hilbert space. Such algorithms are therefore not adapted for sampling a distribution of quantum states over a Hilbert space.

SUMMARY OF THE INVENTION

Hence, there exists a need for a method enabling to sample quantum states distributed according to a distribution in a Hilbert space.

To this end, the invention relates to a method for sampling quantum states distributed according to a distribution in a Hilbert space, the method being implemented by a computing system comprising a quantum processor having an array of qubits, the method comprising the sampling of the quantum states of the Hilbert space using a Markov chain algorithm, the first sample being the initial quantum state of the array of qubits, each other sample being obtained one by one, by preparing the array of qubits so that its quantum state corresponds to the previous sample and by performing a quantum evolution of the quantum state of the prepared array of qubits, each quantum evolution being performed by applying a Many-Body Localization unitary evolution operator to the array of qubits.

The method according to the invention may comprise one or more of the following features considered alone or in any combination that is technically possible:

- the preparation of the array of qubits comprises, starting from the array of qubits in its initial quantum state, the application of all previous Many-Body Localization unitary evolution operators to such array of qubits, enabling to obtain the array of qubit whose quantum state corresponds to the previous sample;
- the sampling of the quantum states comprises the following steps:

    - preparing the array of qubits in the initial quantum state,
    - performing a quantum evolution of the quantum state of the prepared array of qubits by applying a Many-Body Localization unitary evolution operator so as to obtain an evolved quantum state,
    - determining whether the quantum evolution is acceptable or not depending on a probability of acceptance, the probability of acceptance being a Metropolis acceptance probability which is the ratio between the value of the distribution for the evolved quantum state and the value of the distribution for the initial quantum state,
    - determining a new sample of quantum state depending on the acceptance of the quantum evolution, the new sample of quantum state being the evolved quantum state if the quantum evolution is accepted and being the initial quantum state otherwise, the preceding steps being repeated N times by replacing each time the initial quantum state with the last sample of quantum state so as to obtain a Markov chain of samples;

- the determination whether or not the quantum evolution is acceptable comprises the comparison of the probability of acceptance to a random number drawn at random between zero and one for each quantum evolution, the quantum evolution being accepted when the probability of acceptance is above the random number and being rejected otherwise;
- the evolved quantum state is measured by a detecting device of the quantum processor, the detecting device being for example a camera, such as an Electron-Multiplying Charge-Coupled Device camera;
- the applied quantum evolutions fulfill an irreducibility criterion, the irreducibility criterion stating that the chain of Many-Body Localization unitary evolution operators applied for each evolution is equivalent to a Circular Unitary Ensemble unitary evolution operator;
- the applied quantum evolutions fulfill a reversibility criterion, the reversibility criterion stating that the probability of performing a quantum evolution from any quantum state to any other quantum state is the same as the probability of performing the inverse quantum evolution;

- the quantum array of the quantum processor is formed of qubits which are chosen among the following elements: neutral atoms, superconducting qubits, Nitrogen-Vacancy centers, photons, ions, electrons, molecules and quantum dots;
- for each quantum evolution, the Many-Body Localization unitary evolution operator is carried out with Floquet engineering which consists in controlling quantum systems using time periodic external fields;
- the obtained samples are used to solve a combinatorial problem, such as a Quadratic Unconstrained Binary Optimization, said QUBO, problem;
- the solving of a QUBO problem is performed by choosing as a distribution a Boltzmann distribution of the type $D(|\psi\rangle) = e^{-\beta C(|\psi\rangle)}$ where D is the Boltzmann distribution, $\beta$ is a tunable parameter and C is a QUBO cost function.

The invention also relates to a computing system configured for implementing a method as previously described, the computing system comprising a quantum processor having an array of qubits.

BRIEF DESCRIPTION OF THE DRAWINGS

The invention will be easier to understand in view of the following description, provided solely as an example and with reference to the appended drawings in which:

- Figure 1 is a schematic view of an example of a computing system configured for implementing a method for sampling quantum states distributed according to a distribution in a Hilbert space, and
- Figure 2 is a schematic view of an example of an organigram of a method for sampling quantum states distributed according to a distribution in a Hilbert space.

DETAILED DESCRIPTION OF SOME EMBODIMENTS

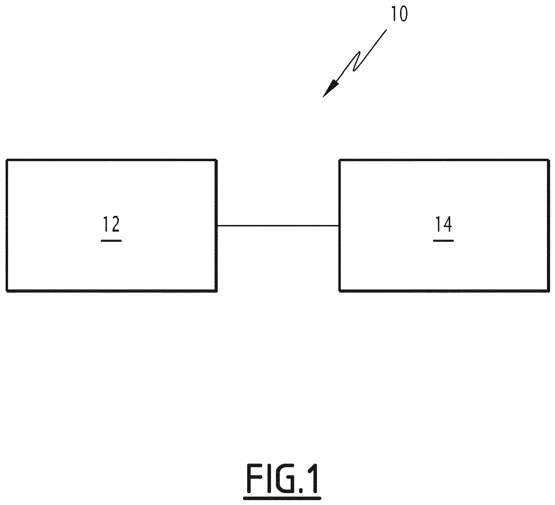

A computing system 10 is illustrated on figure 1. The computing system 10 is configured to implement a method for sampling quantum states distributed according to a distribution D in a Hilbert space H.

To sample from a distribution means to obtain a collection of samples, the occurrence of each sample depending on the probability of obtaining the sample according to the distribution (for example, there will be more samples corresponding to a higher probability of the distribution, and less samples corresponding to a lower probability of the distribution). If the variables belong to a space X, a distribution is a function (D) that to each object $x \in X$ assigns a real number. This is denoted

$$D: X \to \mathbb{R} .$$

The computing system 10 comprises a quantum processor 12 (quantum processing unit or QPU) and a calculator 14.

In an example, the quantum processor 12 comprises a source of particles, a generator of trapping sites for particles, a detecting device and hardware elements.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber. Other embodiments are nonetheless possible.

The generator of trapping sites is able to generate a laser beam which when focused generates an array of trapping sites for particles (e.g., optical tweezers).

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM). In another example, the beam shaper comprises one or more acousto-optical deflector, or a device with metasurfaces.

The detecting device is configured to detect the presence of particle(s) in the qubit register. The detecting device is, for example, a camera such as a charge-coupled device (CCD) camera, or an Electron-Multiplying CCD (EMCCD) camera, or any suitable imaging technology. For example, in the case of atoms, the camera is suitable to detect the fluorescence emitted from the atoms.

The hardware elements enable to manipulate the particles trapped in the trapping sites and forming the qubits, so as to perform quantum operations on the qubits.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327.

Typically, the quantum processor 12 uses the quantum properties of matter, such as superposition and entanglement, to perform operations on the qubits. In particular, a qubit refers to a two-level quantum system.

In a non-limiting example, a qubit may comprise two basic quantum states $|0\rangle$ and $|1\rangle$ representing the possible quantum states of the qubit. According to the superposition principle of quantum mechanics, any superposition of the form $a|0\rangle + b|1\rangle$ (a and b being complex numbers and $aa^*+bb^*=1$) is a possible quantum state of the qubit.

The particles meant to be trapped in the trapping sites are polarizable particles sensitive to alternative current (AC) Stark shift from lasers.

Preferably, the particles are atoms, and in particular electrically neutral atoms. Neutral atoms are, for example, alkali atoms (such as Rubidium or Cesium atoms) or alkaline-earth atoms (such as Strontium or Ytterbium atoms).

The particles have a fundamental state (no excitation) and at least one excited state. The excited state is, for example, a Rydberg state.

In a variant, the quantum array of the quantum processor 12 is formed of qubits which are chosen among the following elements : neutral atoms, superconducting qubits, NV centers (nitrogen-vacancy centers), photons, ions, electrons, molecules and quantum dots.

The calculator 14 is, for example, a classical computer. The calculator 14 comprises typically a processor comprising a data processing unit, memories and a reader for information media. Eventually, the calculator 14 comprises a human machine interface, such as a keyboard, and a display.

In an example of implementation, the calculator 14 interacts with a computer program product. The computer program product comprises an information medium. The information medium is a medium readable by the calculator 14, usually by the data processing unit. The readable information medium is a medium suitable for storing electronic instructions and capable of being coupled to a computer system bus. On the information medium is stored the computer program comprising program instructions. The computer program is loadable on the data processing unit and is adapted to entail some steps of the method that will be described later in the description, when the computer program is loaded on the processing unit of the calculator.

In a variant, the calculator 14 is under the form of an electronic circuit comprising microcontrollers or integrated circuits.

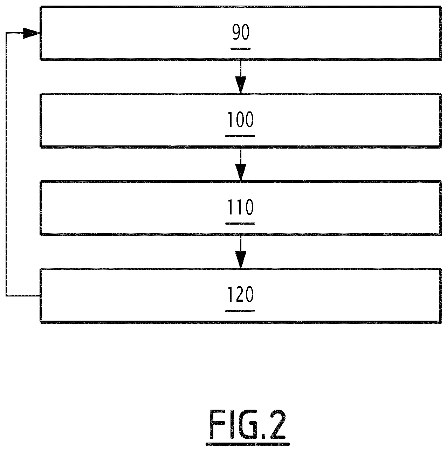

A method for sampling quantum states $|\psi\rangle$ distributed according to a distribution D in a Hilbert space H, will now be described with reference to the organigram of figure 2. The method is implemented by the computing system 10.

A quantum state $|\psi\rangle$ corresponds to the collective state of the qubits forming the array of qubits. The quantum state can be decomposed in the computational basis, each element of the computational basis being a state where each qubit typically corresponds to an integer number which is either zero (fundamental state) or one (excited state).

The method comprises the sampling of the quantum states $|\psi\rangle$ of the Hilbert space H using a Markov chain algorithm. A Markov chain is defined as a stochastic model describing a sequence of possible events in which the probability of each event depends only on the state attained in the previous event.

The first sample $|\psi_0\rangle$ is the initial quantum state $|\psi_0\rangle$ of the array of qubits. The first sample $|\psi_0\rangle$ is typically either the state $|00 \dots 0\rangle$ where all qubits are in the fundamental state, or it is generated at random.

Each other sample $|\psi_k\rangle$ is obtained one by one, by preparing the array of qubits so that its quantum state $|\psi\rangle$ corresponds to the previous sample $|\psi_{k-1}\rangle$, and by performing a quantum evolution of the quantum state $|\psi\rangle$ of the prepared array of qubits. Each quantum evolution is performed by applying a Many-Body Localization unitary evolution operator to the array of qubits.

In an example, the preparation of the array of qubits comprises, starting from the array of qubits in its initial quantum state $|\psi_0\rangle$, the application of all previous Many-Body Localization unitary evolution operators (the MBL used to obtain the previous samples) to such array of qubits, enabling to obtain the array of qubit whose quantum state $|\psi\rangle$ corresponds to the previous sample $|\psi_{k-1}\rangle$.

In a variant, the preparation of the array of qubits comprises applying a state preparation algorithm to the array of qubits in any quantum state so as to obtain the array of qubit whose quantum state $|\psi\rangle$ corresponds to the previous sample $|\psi_{k-1}\rangle$. The state preparation algorithm is for example as described in the article Grover, Lov K.. "Rapid sampling though quantum computing." Symposium on the Theory of Computing (2000).

Each quantum evolution is performed by applying a Many-Body Localization unitary evolution operator to the array of qubits. The applied Many-Body Localization unitary evolution operators can be different for the different quantum evolutions. In a variant, the applied Many-Body Localization unitary evolution operators are identical for the different quantum evolutions.

The concept of Many-Body Localization (MBL) is described in the article Abanin, D., Altman, E., Bloch, I., & Serbyn, M. (2019). Colloquium: Many-body localization, thermalization, and entanglement. Rev. Mod. Phys., 91, 021001. In a nutshell, MBL is a phenomenon where a quantum system retains at all times a "memory" of its initial conditions. In a sense, we never stay too far from the initial state during the whole evolution. Hence, applying a MBL evolution operator might be considered an equivalent of a small move in a Hilbert space H. On the opposite end, if the system completely loses information of its initial conditions, we will say that the system is thermalized, and this would be the equivalent of a very long move in the Hilbert space H.

In an example of embodiment, the sampling of the quantum states $|\psi\rangle$ comprises the following steps.

The first step 90 consists in preparing the array of qubits in the initial quantum state $|\psi_0\rangle$. The first step 90 is, for example, carried out by the quantum processor 12 of the computing system 10.

The second step 100 consists in performing a quantum evolution of the quantum state of the prepared array of qubits by applying a Many-Body Localization unitary evolution operator so as to obtain an evolved

quantum state $|\psi\rangle$. The second step 100 is, for example, carried out by the quantum processor 12 of the computing system 10.

For example, the application of each Many-Body Localization unitary evolution operator corresponds to specific laser pulses applied on the array of qubits.

In an example of implementation, for each quantum evolution, the Many-Body Localization unitary evolution operator is carried out with Floquet engineering. Floquet engineering consists in controlling quantum systems using time periodic external fields.

In particular, the use of Floquet engineering is of particular interest when using a quantum processor based on neutral atoms. Several references describe how to do so, both theoretically and experimentally, with neutral atoms:

- Thanasilp, S., Tangpanitanon, J., Lemonde, M.A., Dangniam, N., & Angelakis, D. (2021). Quantum supremacy and quantum phase transitions. Phys. Rev. B, 103, 165132
- Jae-yoon Choi et al. Exploring the many-body localization transition in two dimensions. Science 352, 1547-1552 (2016). DOI:10.1126/science.aaf8834
- Bordia, P., Lüschen, H., Schneider, U. et al. Periodically driving a many-body localized quantum system. Nature Phys 13, 460-464 (2017). https://doi.org/10.1038/nphys4020

Floquet engineering is also relevant for other types of quantum processors, for example based on superconductors or trapped ions architectures.

Preferably, the applied quantum evolutions fulfill an irreducibility criterion. The irreducibility criterion states that the chain of Many-Body Localization unitary evolution operators applied for each evolution is equivalent to a Circular Unitary Ensemble (CUE) unitary evolution operator.

More precisely, irreducibility means that it is possible to explore every corner of the Hilbert space H (not necessarily in a single move). Chaining together many MBL unitaries results in what's called a CUE unitary. This means that the Hilbert space exploration is extremely good, and we can reach a good portion of it.

In the present invention, the irreducibility is ensured by the fact that the unitary evolution operators are MBL unitary evolution operators.

Preferably, the applied quantum evolutions fulfill a reversibility criterion. The reversibility criterion states that the probability of performing a quantum evolution from any quantum state $|\psi_i\rangle$ to any other quantum state $|\psi_k\rangle$ is the same as the probability of performing the inverse quantum evolution. The use of Many-Body Localization unitary evolution operators carried out with Floquet engineering enables to fulfill such a reversibility criterion.

In a variant, the applied quantum evolutions fulfill a pseudo-reversibility criterion, which is an approximation of the reversibility criterion.

In an example of embodiment, the evolved quantum state $|\psi\rangle$ is measured by a detecting device (camera) of the quantum processor 12.

The third step 110 is the determination whether or not the quantum evolution is acceptable depending on a probability of acceptance $P_{acc}$. The probability of acceptance $P_{acc}$ is the Metropolis acceptance probability which is the ratio between the value $D(|\psi\rangle)$ of the distribution D for the evolved quantum state $|\psi\rangle$ (with the evolved quantum state $|\psi\rangle$ being for example measured by the detection device) and the value $D(|\psi_0\rangle)$ of the distribution D for the initial quantum state $|\psi_0\rangle$. The third step 110 is, for example, carried out by the calculator 14 of the computing system 10.

In an example, the determination whether or not the quantum evolution is acceptable comprises the comparison of the probability of acceptance $P_{acc}$ to a random number drawn at random between zero and one for each quantum evolution. The quantum evolution is accepted when the probability of acceptance $P_{acc}$ is above the random number and is rejected otherwise.

In another example, the determination whether or not the quantum evolution is acceptable comprises the comparison of the probability of acceptance $P_{acc}$ to a predetermined number comprised between zero and one. The quantum evolution is accepted when the probability of acceptance $P_{acc}$ is above the predetermined number and is rejected otherwise.

The fourth step 120 is the determination of a new sample $|\psi_k\rangle$ of quantum state depending on the acceptance of the quantum evolution. The new sample $|\psi_k\rangle$ of quantum state is the evolved quantum state $|\psi\rangle$ if the quantum evolution is accepted and is the initial quantum state $|\psi_0\rangle$ otherwise. The fourth step 120 is, for example, carried out by the calculator 14 of the computing system 10.

The preceding steps are repeated N times by replacing each time the initial quantum state $|\psi_0\rangle$ with the last sample $|\psi_k\rangle$ of quantum state so as to obtain a Markov chain of samples $(|\psi_0\rangle,|\psi_1\rangle, ..., |\psi_N\rangle)$. In this case, the preparation step 90 is for example carried out as previously described (applying all the previous MBL on the initial quantum state, or using a state preparation algorithm).

In an example of implementation, due to the use of Markov chains, only the samples comprised between the M-th sample and the last sample are distributed according to the distribution D of quantum state in the Hilbert space H (uniformly distributed).

In the following, we give an example explaining how to choose the number M, i.e. how many samples have to be discarded at the beginning of a Markov chain. The idea is that Markov chains are initialized with a random state, and the first few samples will basically be a random walk around this initial state, which is not necessarily representative of the distribution we want to sample. Therefore we need to discard these few iterations. The number of iterations that are necessary for the Markov chain to exit this initial phase of random walking around the initial state is called thermalization time, or mixing time.

The number M is here estimated in a post-processing phase. Denote with x the states of the chain, with X the space where the states belong, and D the distribution, then:

1. Initialize two Markov chains from two different initial states $x_0^{(1)}$ and $x_0^{(2)}$. Let's call the two chains "Markov chain 1" and "Markov chain 2".
2. Collect a certain number of samples from both Markov chains.
3. Compute, iteration after iteration, the value of a certain function f: $X \rightarrow \mathbb{R}$. For example, it can be the value of the distribution itself D(x) for every x that was sampled.
4. Plot the value of the function for both Markov chains, and note the iteration number where the two Markov chains start to overlap and oscillate around each other. Take twice that number, and that's the number of iterations you need to discard in this example.

Take the example where the space $X = \mathbb{R}$ and the distribution is a Gaussian D(x) = $e^{-\frac{x^2}{2\sigma^2}}$. If we follow the above steps, initializing "Markov chain 1" from

$$x_0^{(1)} = 1000$$

and "Markov chain 2" from

$$x_0^{(2)} = -1000$$

. The two Markov chains will initially perform a random walk around the initial state, but gradually they will move towards the correct distribution. The thermalization time can be estimated by taking twice the point where the two chains start oscillating around a common value.

In an example, the obtained samples $(|\psi_0\rangle, |\psi_1\rangle, ..., |\psi_N\rangle)$ are used to solve a combinatorial problem, such as a Quadratic Unconstrained Binary Optimization (QUBO) problem.

In an example, the solving of a QUBO problem is performed by choosing as a distribution D a Boltzmann distribution of the type $D(|\psi\rangle) = e^{-\beta C(|\psi\rangle)}$ where D is the Boltzmann distribution, $\beta$ is a tunable parameter and C is the QUBO cost function.

In other examples, the obtained samples $(|\psi_0\rangle, |\psi_1\rangle, ..., |\psi_N\rangle)$ are used for simulating spin systems beyond the actual constraints of the hardware, for preparing for arbitrary states or for generative modelling.

Hence, the above method enables to sample quantum states distributed according to a distribution D in a Hilbert space H. The use of many-body localization is of particular interest because it allows an extensive exploration of the Hilbert space H in a controlled way.

The person skilled in the art will understand that the embodiments and variants described above in the description can all be combined provided that they are technically compatible.

## Claims

1. A method for sampling quantum states $(|\psi\rangle)$ distributed according to a distribution (D) in a Hilbert space (H), the method being implemented by a computing system (10) comprising a quantum processor (12) having an array of qubits, the method comprising the sampling of the quantum states $(|\psi\rangle)$ of the Hilbert space (H) using a Markov chain algorithm, the first sample $(|\psi_0\rangle)$ being the initial quantum state $(|\psi_0\rangle)$ of the array of qubits, each other sample $(|\psi_k\rangle)$ being obtained one by one, by preparing the array of qubits so that its quantum state $(|\psi\rangle)$ corresponds to the previous sample $(|\psi_{k-1}\rangle)$ and by performing a quantum evolution of the quantum state $(|\psi\rangle)$ of the prepared array of qubits, each quantum evolution being performed by applying a Many-Body Localization unitary evolution operator to the array of qubits.

2. A method according to claim 1, wherein the preparation of the array of qubits comprises, starting from the array of qubits in its initial quantum state $(|\psi_0\rangle)$, the application of all previous Many-Body Localization unitary evolution operators to such array of qubits, enabling to obtain the array of qubit whose quantum state $(|\psi\rangle)$ corresponds to the previous sample $(|\psi_{k-1}\rangle)$.

3. A method according to claim 1 or 2, wherein the sampling of the quantum states $(|\psi\rangle)$ comprises the following steps:

- preparing the array of qubits in the initial quantum state $(|\psi_0\rangle)$,
- performing a quantum evolution of the quantum state of the prepared array of qubits by applying a Many-Body Localization unitary evolution operator so as to obtain an evolved quantum state $(|\psi'\rangle)$,
- determining whether the quantum evolution is acceptable or not depending on a probability of acceptance $(P_{acc})$, the probability of acceptance $(P_{acc})$ being a Metropolis acceptance probability which is the ratio between the value $(D(|\psi'\rangle))$ of the distribution (D) for the evolved quantum state $(|\psi'\rangle)$ and the value $(D(|\psi_0\rangle))$ of the distribution (D) for the initial quantum state $(|\psi_0\rangle)$,
- determining a new sample $(|\psi_1\rangle)$ of quantum state depending on the acceptance of the quantum evolution, the new sample $(|\psi_1\rangle)$ of quantum state being the evolved quantum state $(|\psi'\rangle)$ if the

quantum evolution is accepted and being the initial quantum state ($|\psi_0\rangle$) otherwise,

the preceding steps being repeated N times by replacing each time the initial quantum state ($|\psi_0\rangle$) with the last sample ($|\psi_k\rangle$) of quantum state so as to obtain a Markov chain of samples ($|\psi_0\rangle, |\psi_1\rangle, ..., |\psi_N\rangle$).

4. A method according to claim 3, wherein the determination whether or not the quantum evolution is acceptable comprises the comparison of the probability of acceptance ($P_{acc}$) to a random number drawn at random between zero and one for each quantum evolution, the quantum evolution being accepted when the probability of acceptance ($P_{acc}$) is above the random number and being rejected otherwise.

5. A method according to claim 3 or 4, wherein the evolved quantum state ($|\psi'\rangle$) is measured by a detecting device of the quantum processor (12), the detecting device being for example a camera, such as an Electron-Multiplying Charge-Coupled Device camera.

6. A method according to any one of claims 1 to 5, wherein the applied quantum evolutions fulfill an irreducibility criterion, the irreducibility criterion stating that the chain of Many-Body Localization unitary evolution operators applied for each evolution is equivalent to a Circular Unitary Ensemble unitary evolution operator.

7. A method according to any one of claims 1 to 6, wherein the applied quantum evolutions fulfill a reversibility criterion, the reversibility criterion stating that the probability of performing a quantum evolution from any quantum state ($|\psi_i\rangle$) to any other quantum state ($|\psi_k\rangle$) is the same as the probability of performing the inverse quantum evolution.

8. A method according to any one of claims 1 to 7, wherein the quantum array of the quantum processor (12) is formed of qubits which are chosen among the following elements: neutral atoms, superconducting qubits, Nitrogen-Vacancy centers, photons, ions, electrons, molecules and quantum dots.

9. A method according to any one of claims 1 to 8, wherein for each quantum evolution, the Many-Body Localization unitary evolution operator is carried out with Floquet engineering which consists in controlling quantum systems using time periodic external fields.

10. A method according to any one of claims 1 to 9, wherein the obtained samples ($|\psi_0\rangle, |\psi_1\rangle, ..., |\psi_N\rangle$) are used to solve a combinatorial problem, such as a Quadratic Unconstrained Binary Optimization, said QUBO, problem.

11. A method according to claim 10, wherein the solving of a QUBO problem is performed by choosing as a distribution (D) a Boltzmann distribution of the type $D(|\psi\rangle) = e^{-\beta C(|\psi\rangle)}$ where D is the Boltzmann distribution, $\beta$ is a tunable parameter and C is a QUBO cost function.

12. A computing system (10) configured for implementing a method according to any one of claims 1 to 11, the computing system (10) comprising a quantum processor (12) having an array of qubits.

10

12

14

FIG.1

## FIG.2

Europäisches
Patentamt

European
Patent Office

Office européen
des brevets

# EUROPEAN SEARCH REPORT

**Application Number**

**EP 23 30 7014**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL P ZALETEL ET AL: "Colloquium: Quantum and Classical Discrete Time Crystals", ARXIV.ORG, CORNELL UNIVERSITY LIBRARY, 201 OLIN LIBRARY CORNELL UNIVERSITY ITHACA, NY 14853, 15 May 2023 (2023-05-15), XP091509050, * Section IV.C; figure 5 * | 1-12 | INV. G06N10/40 G06N10/60 |
| A | ALEXANDER M DALZELL ET AL: "Quantum algorithms: A survey of applications and end-to-end complexities", ARXIV.ORG, CORNELL UNIVERSITY LIBRARY, 201 OLIN LIBRARY CORNELL UNIVERSITY ITHACA, NY 14853, 4 October 2023 (2023-10-04), XP091630625, * Sections 4.2 and 9.2 * | 1-12 | |
| A | Dissertation A ET AL: "FROM ELECTRON GLASSES TO QUANTUM MACHINE LEARNING: A STUDY IN QUADRATIC UNCONSTRAINED BINARY OPTIMIZATION", , 16 January 2020 (2020-01-16), XP093150854, Retrieved from the Internet: URL:https://oaktrust.library.tamu.edu/bits tream/handle/1969.1/191542/BARZEGAR-DISSER TATION-2020.pdf?sequence=1 [retrieved on 2024-04-11] * Section 2.3 * | 1-12 | **TECHNICAL FIELDS SEARCHED (IPC)** G06N |

-/--

The present search report has been drawn up for all claims

| Place of search | Date of completion of the search | Examiner |
|---|---|---|
| The Hague | 11 April 2024 | Szymanski, Francois |

Europäisches Patentamt

European Patent Office

Office européen des brevets

## EUROPEAN SEARCH REPORT

**Application Number**

EP 23 30 7014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ONODERA TATSUHIRO ET AL: "A quantum annealer with fully programmable all-to-all coupling via Floquet engineering", ARXIV:1501.02813, vol. 6, no. 1, 29 May 2020 (2020-05-29), XP093150853, ISSN: 2056-6387, DOI: 10.1038/s41534-020-0279-z Retrieved from the Internet: URL:https://www.nature.com/articles/s41534-020-0279-z.pdf> * see the Abstract, as well as the Methods section: "Monte-Carlo wavefunction method (i.e., quantum-jump method) to solve (8) via stochastic sampling" * ----- | 1-12 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 11 April 2024 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOÏC HENRIET ; LUCAS BEGUIN ; ADRIEN SIGNOLES ; THIERRY LAHAYE ; ANTOINE BRO-WAEYS ; GEORGES-OLIVIER REYMOND ; CHRIS-TOPHE JURCZAK**. Quantum computing with neutral atoms. *Quantum*, September 2020, vol. 4, 327
- **GROVER, LOV K.** Rapid sampling though quantum computing. *Symposium on the Theory of Computing*, 2000
- **ABANIN, D. ; ALTMAN, E. ; BLOCH, I. ; SERBYN, M.** Colloquium: Many-body localization, thermalization, and entanglement. *Rev. Mod. Phys.*, 2019, vol. 91, 021001

- **THANASILP, S. ; TANGPANITANON, J. ; LEM-ONDE, M.A. ; DANGNIAM, N. ; ANGELAKIS, D.** Quantum supremacy and quantum phase transitions. *Phys. Rev. B*, 2021, vol. 103, 165132
- **JAE-YOON CHOI et al.** Exploring the many-body localization transition in two dimensions. *Science*, 2016, vol. 352, 1547-1552
- **BORDIA, P. ; LÜSCHEN, H. ; SCHNEIDER, U. et al.** Periodically driving a many-body localized quantum system. *Nature Phys*, 2017, vol. 13, 460-464, https://doi.org/10.1 038/nphys4020